# EUROPÄISCHE PATENTSCHRIFT

(11) **EP 2 689 151 B1**
(45) Veröffentlichungstag und Bekanntmachung des Hinweises auf die Patenterteilung: **22.02.2017**
(21) Anmeldenummer: 12707764.2
(22) Anmeldetag: 08.03.2012
(51) Int. Cl.: F16B 39/24, F16B 39/26, F16B 39/32

(54) **SCHRAUBE MIT AUFDREHSICHERUNG**
SCREW WITH ANTI-LOOSENING MEANS
VIS À SÉCURITÉ ANTI-DESSERRAGE

(30) Priorität: 25.03.2011 DE 102011001564
(43) Veröffentlichungstag der Anmeldung: 29.01.2014
(73) Patentinhaber: Hugo Benzing GmbH & Co. KG, 70825 Korntal-Münchingen (DE)
(72) Erfinder: BENZING, Christian, 70192 Stuttgart (DE)
(74) Vertreter: Fleck, Hermann-Josef
(86) Internationale Anmeldenummer: PCT/EP2012/054017
(87) Internationale Veröffentlichungsnummer: WO 2012/130583

(56) Entgegenhaltungen:
- EP-A1- 1 464 853
- FR-A- 1 285 107
- US-A- 3 419 057
- US-A- 5 967 724

## Beschreibung

Die Erfindung bezieht sich auf eine Schraube mit Aufdrehsicherung, die ein Sicherungselement aufweist, welches mit einem Ringabschnitt versehen und mit diesem um einen Schaft der Schraube unter einem Kopf derselben eingesetzt oder einsetzbar ist und in einem an einer Basis angeschraubten Zustand der Schraube deren Rückdrehen entgegen einer Einschraubrichtung verhindert, wobei das Sicherungselement an dem Ringabschnitt auf dessen der zugewandten Oberfläche der Basis zugekehrten Seite mit mindestens einem in die Oberfläche beim Eindrehen der Schraube eindrückbaren Vorsprung versehen ist

Eine Schraube mit Aufdrehsicherung dieser Art ist in der EP 2 110 567 A2 gezeigt. In einem Ausführungsbeispiel (Fig. 27, 28) weist dabei die Aufdrehsicherung unter dem Schraubkopf einen Ringabschnitt auf, dessen einer Basis zugekehrte Unterseite mit spitzen Vorsprüngen versehen ist, die beim Anziehen der Schraube in die zugekehrte Oberfläche der Basis eingedrückt werden. Bei einem anderen Ausführungsbeispiel (Fig. 47, 48) ist der Ringabschnitt auf seiner Unterseite mit in ein Langloch der Basis eingreifenden Zangen und an seiner Oberseite mit einem zylindrischen Ring versehen, in dem in Umfangsrichtung zeigende, mit einer hemmenden Struktur der Schraube zusammenwirkende Zungen ausgestanzt sind. Dieser Aufbau ist relativ aufwändig und auch beim Gebrauch können sich ungünstige Situationen ergeben, die zu einer nachteiligen Handhabung führen.

In der US 3,419,057 A ist eine Schraube mit einer Aufdrehsicherung gezeigt, die eine ringförmige Scheibe mit einer seitlich radial abstehenden, in eine Nut eingreifenden Zunge und mit einem axial zum Schraubkopf hin gerichteten Vorsprung aufweist, der mit einer an dem Schraubkopf umfangsseitig ausgebildeten hemmenden Struktur zusammenwirkt. Auf einer Basis mit einer flachen Oberfläche bietet eine solche Ausführung keinen zuverlässigen Halt und bei der Handhabung können sich ebenfalls Nachteile ergeben.

Eine weitere Schraube mit Aufdrehsicherung ist in der DE 10 2006 029 253 B3 gezeigt. Die Aufdrehsicherung weist dabei ein unter einem Kopf der Schraube um einen Gewindeschaft einsetzbares Sicherungselement auf, das als gegenüber einem ebenen Ausgangszustand abgewinkelte Scheibe aus einem plastisch verformbaren Material ausgebildet ist. Mit der Aufdrehsicherung wird die Schraube gegen ein zurückdrehendes Lösen gesichert.

Die FR 1 285 107 A zeigt eine Mutter mit einem Sicherungselement, das einen Ringabschnitt aufweist, auf dessen einer Seite fingerartige federelastische Fortsätze abgebogen sind, und auf dessen anderer Seite zackenartige Spitzen vorstehen. Die fingerartigen Fortsätze treten mit der Außenumfangsfläche der sechskantigen Mutter klemmend in Anlage.

Eine Mutter mit Sicherungselement ist auch in der US 5,967,724 A gezeigt, wobei das Sicherungselement einen Ringabschnitt mit radial nach außen vorstehenden klauenartigen Halteelementen aufweist, die bei einigen Ausführungsbeispielen ebenfalls mit der äußeren Umfangsfläche der sechskantigen Mutter klemmend in Anlage treten und bei anderen Ausführungsbeispielen einen ringförmigen Abschnitt der Mutter übergreifen und in angepasste Aufnahmen eintreten.

Die EP 1 464 853 A1 zeigt eine selbstsichernde Befestigungsvorrichtung mit einer Buchse und einer in die Buchse eindrehbaren Schraube mit einem mehrstufig sich erweiternden, insbesondere konusförmigen Schraubenkopf. Die Schraube verkrallt sich bei Drehung in einer der beiden Drehrichtungen in der Buchse.

Weitere verschiedene Aufdrehsicherungen für Schrauben, die auf zwischen dem Schraubenkopf oder einer Mutter und einer Sicherungsscheibe wirkenden hemmenden Strukturen oder auf einer federelastischen Wirkung basieren, sind in der DE 20 2007 019 121 U1, der DE 20 2009 011 269 U1, der DE 20 2010 009 496 U1, der DE 10 2005 054 471 A1, der DD 212 561, der DE 699 01 105 T2 und der DE 10 2008 056 368 A1 gezeigt.

Oft sind Schrauben an unterschiedlichen Gegenständen zu befestigen oder in unterschiedlichen Einsatzfällen anzuwenden, in denen eine Federwirkung oder einfache, z. B. mittels Zacken ineinander greifende Oberflächenstrukturen zu einer zuverlässigen Sicherung nicht ausreichen. Beispielsweise können sich Schrauben oder Muttern mit einer solchen Aufdrehsicherung in Verbindung mit verschiedenen Oberflächen, die ihrerseits z. B. weich oder elastisch sind, in ungünstigen Fällen, wie etwa bei Vibrationen oder Erschütterungen, lösen.

Der vorliegenden Erfindung liegt die Aufgabe zugrunde, eine Schraube mit Aufdrehsicherung der eingangs genannten Art bereit zu stellen, die bei einfacher Handhabung auch in Verbindung mit unterschiedlichen Oberflächenmaterialien der Basis ein Lösen durch ein Zurückdrehen der Schraube mit erhöhter Sicherheit gewährleisten.

Diese Aufgabe wird mit den Merkmalen des Anspruches 1 gelöst. Hierbei ist vorgesehen, dass das Sicherungselement in dem Außenumfangsbereich des Ringabschnitts mit fingerartigen Fortsätzen versehen ist, die sich im eingesetzten Zustand des Sicherungselements entlang dem Umfang des Kopfes erstrecken und unter federelastischen Kräften des Sicherungselements mit einer entgegen der Eindrehrichtung hemmend wirkenden Oberflächenstruktur des Kopfes in Anlage treten, wobei die hemmend wirkende Oberflächenstruktur in Eindrehrichtung abfallende flache Flanken aufweist, die über entgegen der Eindrehrichtung abfallende steilere Flanken ineinander übergehen, und dass die Fortsätze nach innen abgebogene Endabschnitte aufweisen, die den Kopf oder einen daran radial vortretenden oder mit einer umlaufenden Nut begrenzten Umfangsabschnitt desselben, in dem die hemmende Oberflächenstruktur ausgebildet ist, auf dessen von dem Schaft abgekehrten Oberseite übergreifen.

Durch die Fortsätze entlang dem Umfang bzw. der Umfangsfläche des Kopfes und das Zusammenwirken derselben mit der Oberflächenstruktur des Kopfes aufgrund der federelastischen Kräfte ergibt sich in Verbindung mit den in die Oberfläche eindrückbaren Vorsprüngen eine zuverlässige Aufdrehsicherung, die auch bei weicheren Oberflächenmaterialien des Untergrundes oder bei Materialermüdung noch ein Lösen durch Zurückdrehen der Schraube sicher verhindert. Mit der genannten Ausbildung ergibt sich ein einfaches Eindrehen der Schraube bei zuverlässiger Sicherung gegen ein Aufdrehen, wobei das Sicherungselement mit seinen Vorsprüngen beim Eindrehen frühzeitig in der Oberfläche festgehalten wird und sich mit der Schraube nicht mitdreht. Die Oberflächenstruktur des Kopfes kann sich z. B. lediglich über einen der Oberfläche der Basis zugekehrten unteren, radial erweiterten oder von einer umlaufenden Nut begrenzten und so einen übergreifbaren Absatz bildenden Umfangsbereich des Kopfes erstrecken, so dass im oberen Umfangsbereich noch ein Werkzeug angesetzt werden kann. Alternativ kann in dem Kopf in dessen zentralem Oberseitenbereich eine vertiefte oder erhabene Werkzeugaufnahme angeordnet sein. Mittels der nach innen abgebogenen Endabschnitte der Fortsätze wird das Sicherungselement stets unverlierbar und gut handhabbar an dem Schraubkopf gehalten.

Eine vorteilhafte Ausgestaltung besteht darin, dass die Fortsätze selbst federelastisch ausgebildet sind. Eine Alternative zu den federelastischen Fortsätzen wäre z. B. ein geschlitzter Ringabschnitt, der selbst federelastisch ist, so dass die Fortsätze nach außen beim Eindrehen federelastisch ausgelenkt und in die Oberflächenstrukturen des Kopfes eintreten können. Jedoch ist bei einer solchen Auslenkung der Ringabschnitte selbst nachteilig, dass die eindrückbaren Vorsprünge in der Oberfläche (annähernd) radial bewegt werden und ihr Eingriff in die Oberfläche beeinträchtigt wird.

Ist vorgesehen, dass der lichte Abstand zwischen dem Ringabschnitt und dem abgebogenen Endabschnitt mindestens der Höhe des Kopfes oder des Absatzes in axialer Richtung der Schraube entspricht, ergibt sich ein sicherer spielfreier Sitz des Sicherungselements an dem Schraubkopf.

Vorteilhafte Ausgestaltungen bestehen darin, dass das Sicherungselement als Stanz-Biege-Teil oder Formteil aus Metall oder als Formteil aus Kunststoff hergestellt ist.

Für die Funktion und Herstellung sind des Weiteren die Maßnahmen von Vorteil, dass die Fortsätze am Außenumfangsbereich und/oder der mindestens eine Vorsprung an einem Innenumfangsbereich des Ringabschnittes abgebogen ist/sind.

Verschiedene Ausgestaltungsvarianten bestehen darin, dass die hemmend wirkende Oberflächenstruktur an der Umfangsfläche des Kopfes und/oder auf dessen von dem Schaft abgewandter Oberseite ausgebildet ist.

Eine vorteilhafte Ausgestaltung besteht dabei darin, dass die an der Umfangsfläche des Kopfes ausgebildeten flachen Flanken im Querschnitt geradlinig oder nach außen konvex geformt sind.

Für die Funktion sind weiterhin die Maßnahmen von Vorteil, dass die Ausdehnung der Fortsätze in Eindrehrichtung höchstens so groß ist wie die Ausdehnung der flachen Flanken.

Zu einer vorteilhaften Funktion tragen des Weiteren die Maßnahmen bei, dass die Fortsätze in Umfangsrichtung ausgedehnt und entsprechend der Kontur der flachen Flanken gegenüber der Umfangslinie verschränkt sind oder dass die Fortsätze in radialer Richtung ausgedehnt sind. Die Ausdehnung der Fortsätze in radialer Richtung ergibt ebenfalls eine günstige Herstellungsmöglichkeit des Sicherungselements als Stanz-Biege-Teil.

Ist vorgesehen, dass die Fortsätze über einen nach außen ausgebogenen Übergangsabschnitt in den Ringabschnitt übergehen, wird die Federwirkung der Fortsätze und die damit verbundene Funktion der Aufdrehsicherung sowie auch die Handhabung begünstigt.

Für eine schnelle Festlegung des Sicherungselements beim Eindrehen an einer Basis und zum Verhindern eines Lösens durch Rückdrehung sind des Weiteren die Maßnahmen von Vorteil, dass die eindrückbaren Vorsprünge mit eindrückbaren Spitzen versehen sind.

Ein Sicherungselement gemäß einer der vorstehenden Ausführungen kann vorteilhaft ein verschlissenes Sicherungselement ersetzen.

Die Erfindung wird nachfolgend anhand von Ausführungsbeispielen unter Bezugnahme auf die Zeichnungen näher erläutert. Es zeigen:

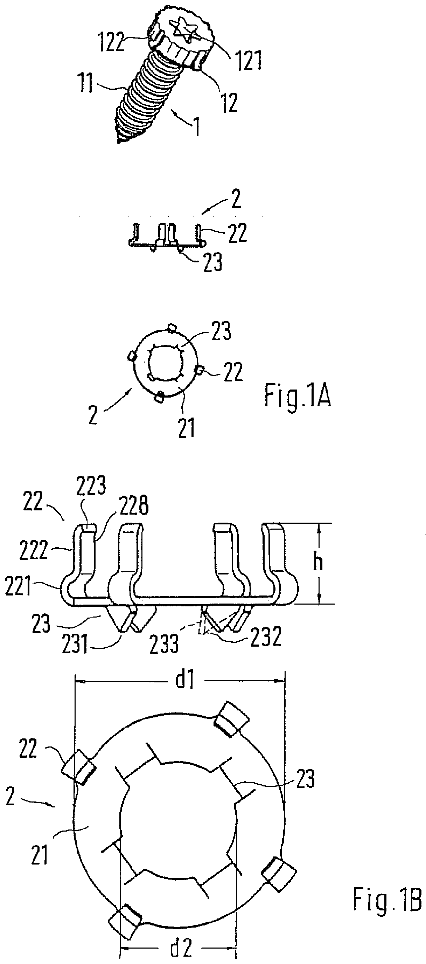

- Fig. 1A: eine Schraube mit Aufdrehsicherung einschließlich eines Sicherungselements in perspektivischer und seitlicher Ansicht sowie einer Draufsicht,
- Fig. 1B: ein Sicherungselement in seitlicher Ansicht und in Draufsicht,

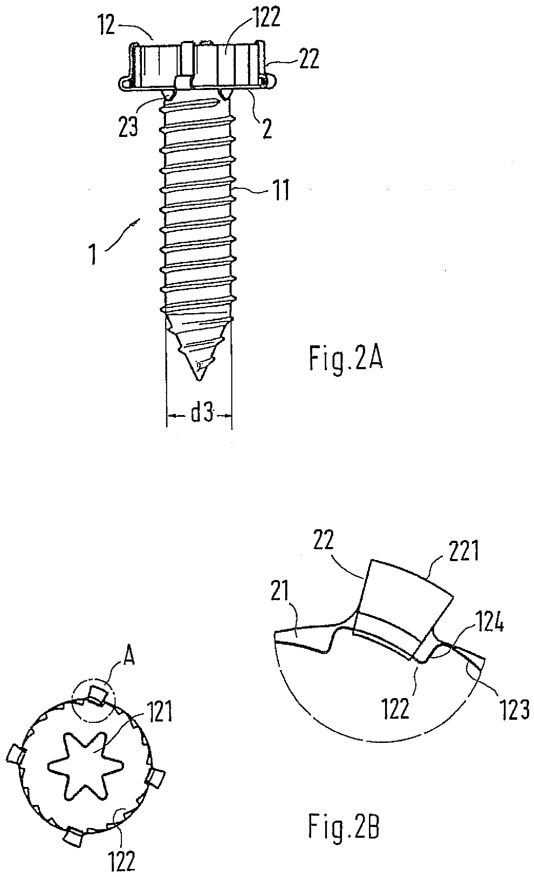

- Fig. 2A: eine Schraube mit Sicherungselement in seitlicher Ansicht,
- Fig. 2B: die Schraube mit Sicherungselement in Draufsicht und einen vergrößerten Ausschnitt desselben,

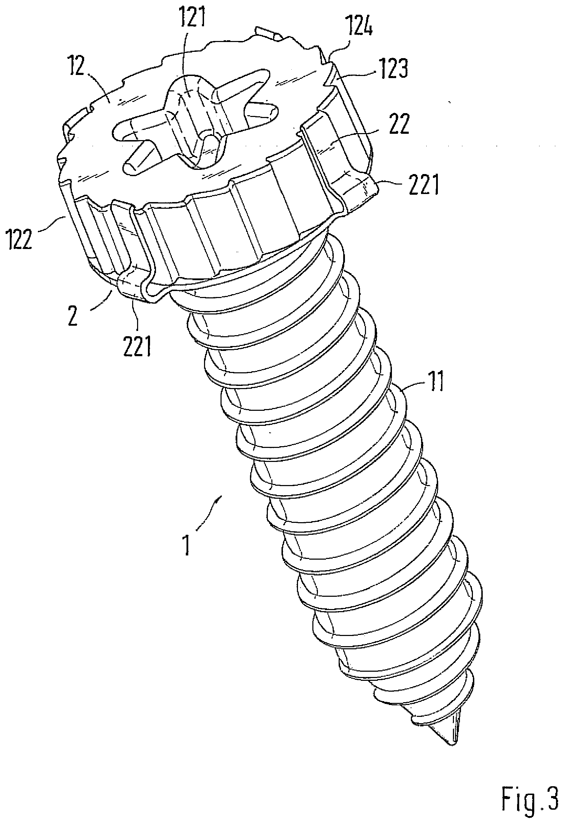

- Fig. 3: eine vergrößerte perspektivische Ansicht der Schraube nach Fig. 1A mit Sicherungselement,

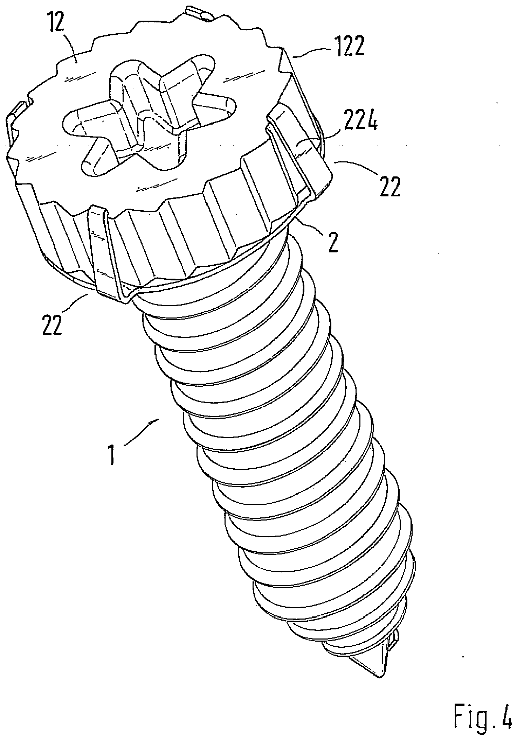

- Fig. 4: die Schraube nach Fig. 3 mit einem anderen Ausführungsbeispiel eines Sicherungselements und

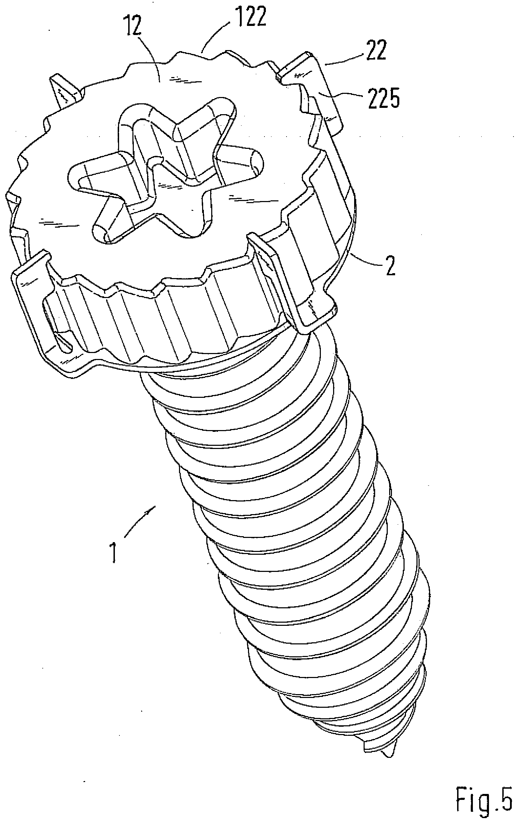

- Fig. 5: die Schraube nach Fig. 3 mit einem weiteren Ausführungsbeispiel eines Sicherungselements.

Fig. 1A zeigt eine Schraube mit Aufdrehsicherung, d. h. einer Sicherung, die ein selbsttätiges Rückdrehen der Schraube 1 entgegen ihrer Eindrehrichtung verhindert.

Die Schraube 1 besteht aus einem Schaft 11 mit Gewinde und einem Kopf 12, der eine zu dem Schaft 11 konzentrische, im Ausführungsbeispiel grob zylinderförmige Umfangsfläche aufweist, die jedoch eine strukturierte Querschnittskontur (Kopfkontur 122) besitzt und damit eine Komponente der Aufdrehsicherung bildet. Auf seiner von dem Schaft 11 abgekehrten Oberseite ist der vorliegend flache Kopf 12 zentral mit einer vertieften Werkzeugaufnahme 121 versehen. Auf der von der Oberseite abgekehrten Unterseite des Kopfes 12 ist ein Sicherungselement 2 mit einem den Schaft 11 umgebenden Ringabschnitt 21 aufgebracht, der an seinem Außenumfang mit abgebogenen, sich entlang der Kopfkontur 122 erstreckenden fingerartigen Fortsätzen 22 und mit auf seiner Unterseite, vorliegend im oder nahe dem inneren Randbereich mit nach unten von dem Kopf 12 weg zeigenden Fixierelementen 23 mit in das Oberflächenmaterial einer Basis bzw. eines Untergrundes, z.B. Werkstücks eindrückbaren Vorsprüngen versehen ist.

Durch die gezeigte Ausbildung wird erreicht, dass das Sicherungselement 2 beim Eindrehen der Schraube 1 frühzeitig mit den vorzugsweise spitz ausgebildeten eindrückbaren Vorsprüngen 231 in die Oberfläche eingreift, während die Fortsätze 22 entlang der Oberflächenstruktur der Kopfkontur 122 gleiten und das Sicherungselement am Mitdrehen mit der Eindrehbewegung der Schraube 1 gehindert wird. Während die an der Oberflächenstruktur bzw. Kopfkontur 122 anliegenden Fortsätze 22 an dieser entlang gleiten, werden die Vorsprünge des Ringabschnitts 21 des Sicherungselements 2 zunehmend in die Oberfläche des Untergrunds eingedrückt. Bereits dadurch kann sich das Sicherungselement 2 auch nicht entgegen der Eindrehrichtung der Schraube 1 drehen. Gleichzeitig verhindern die an der Kopfkontur 122 anliegenden Fortsätze 22 durch das Zusammenwirken mit der Oberflächenstruktur ein Rückwärtsdrehen der Schraube in Aufdrehrichtung.

Wie die Fig. 1B zeigt, ist der Ringabschnitt 21 vorliegend als flache, geschlossene, im Wesentlichen kreisringförmige Scheibe ausgestaltet, an deren äußerem Rand die fingerartigen Fortsätze 22 nach oben (zum Kopf hin) abgebogen sind. Die Fortsätze 22 weisen in ihrem einstückig an den Ringabschnitt 21 anschließenden Bereich einen nach außen konvex gebogenen Übergangsabschnitt 221 auf, der in einen an der Kopfkontur 122 anliegenden Mittelteil 222 übergeht. Die Fortsätze 22 sind dabei aus federelastischem Material hergestellt und der Übergangsabschnitt 221 ergibt eine vorteilhafte Federwirkung, mit der der Mittelteil 222 an die Kopfkontur 122 unter der federelastischen Kraft angedrückt wird. Dabei ist die federelastische Andruckkraft durch die Materialwahl und/oder Geometrie (Breite, Dicke) des Fortsatzes 22, insbesondere in dem Übergangsabschnitt 221 so abgestimmt, dass beim Eindrehen der Schraube möglichst geringe Reibkräfte entstehen, so dass das Sicherungselement 2 frühzeitig nach dem ersten Kontakt mit der Oberfläche des Untergrunds sich nicht weiter dreht und Kratzspuren in dem Untergrund vermieden werden, die auch abträglich beim Bewirken der Haltekraft gegen ein Rückwärtsdrehen sein könnten.

Die freien Endabschnitte 223 der Fortsätze 22 sind nach innen zur Achse der Schraube 1 hin abgebogen, wobei der lichte Abstand zwischen der dem Schraubkopf 1 zugekehrten Oberseite des Ringabschnitts 21 und der Unterseite der Endabschnitte 223 mindestens so groß ist wie die in axialer Richtung verlaufende Höhe des Kopfes 12. Durch diese Ausbildung kann das Sicherungselement 2 vorab an der Schraube 1 unverlierbar fixiert werden. Bei entsprechender Ausbildung des Schraubkopfes 12 zumindest im Randbereich seiner Oberfläche mit einer hemmend wirkenden Oberflächenstruktur, mit der die Endabschnitte 223 zusammenwirken, kann auch dieser Bereich in die Gestaltung der Aufdrehsicherung einbezogen werden. Die Oberflächenkontur des Schraubkopfes 12 kann sich z. B. lediglich über einen der Oberfläche der Basis zugekehrten unteren, radial erweiterten oder von einer umlaufenden Nut begrenzten und so einen Absatz bildenden Umfangsbereich des Schraubkopfes 12 erstrecken, so dass im oberen Umfangsbereich noch ein Werkzeug angesetzt werden kann. Dabei erstrecken sich die Fortsätze 22 über den mit der hemmend wirkenden Oberflächenstruktur versehenen Umfangsbereich und übergreifen den Absatz mit ihren radial einwärts gerichteten Endabschnitten 223, die in die dort gegebenenfalls vorhandene Nut eingreifen.

Durch entsprechende Gestaltung der eindrückbaren Vorsprünge 231 können diese auf verschiedene Materialeigenschaften der Oberfläche des Untergrunds bzw. des Werkstückes geeignet abgestimmt werden, z. B. so, dass sie auch bei härteren Oberflächen sicher eindringen und einen stabilen Halt ergeben, indem sie mit mehr oder weniger scharfen, gegebenenfalls gehärteten Spitzen versehen sind. Die Flanken können so gestaltet werden, dass sie z. B. ein Weiterdrehen nach Kontaktierung der Oberfläche beim Eindrehen der Schraube 1 möglichst schnell verhindern, wozu beispielsweise die in Eindrehrichtung vorne liegenden Flanken 233 möglichst steil verlaufen und evtl. auch etwas in Eindrehrichtung angestellt sein können. Auch die rückwärtige, beim Eindrehen hinten liegende Flanke 232 der eindrückbaren Vorsprünge 231 kann geeignet je nach Oberflächeneigenschaft abgestimmt sein. Denkbar ist es auch, dass die eindrückbaren Vorsprünge 231 nicht im inneren Randbereich des Ringabschnitts 21 abgebogen sind, sondern aus der Scheibenfläche teilweise ausgestanzt und nach unten, von dem Kopf 12 weg abgebogen sind. Denkbar, aber in den meisten Fällen weniger wirksam, ist auch eine Ausstülpung der Vorsprünge 231 durch Prägung.

Das in Fig. 1B dargestellte Sicherungselement 2 lässt sich vorteilhaft aus einer flachen Blechscheibe aus Metall als Stanz-Biege-Teil herstellen. Möglich ist auch die Herstellung als Formteil.

In Fig. 2A ist die Anlage des Sicherungselements 2 an dem Kopf 12 der Schraube 1 mit dem Ringabschnitt 21 und den Mittelteilen 222 der Fortsätze 22 deutlich zu erkennen, wobei die Fixierelemente 23 des Sicherungselement 2 nach unten vorstehen. Der Außendurchmesser d1 des Ringabschnittes 21 (s. Fig. 1B) entspricht dabei in etwa dem Durchmesser des Kopfes 12, während der Innendurchmesser d2 des Ringabschnittes 21 etwas größer ist als der Außendurchmesser d3 des Schaftes 11.

Wie Fig. 2B in einer Ansicht des Kopfes 12 mit dem angelegten Sicherungselement 2 von oben und in einem vergrößerten Ausschnitt A näher zeigt, besitzt die Kopfkontur 122 in Eindrehrichtung der Schraube 1 im Querschnitt flache Flanken, die in Eindrehrichtung zunehmend nach innen zur Achse der Schraube 1 hin verlaufen und über steile Flanken 124 ineinander übergehen. Die Übergangsbereiche zwischen den flachen und steilen Flanken 123, 124 sind gerundet. Bei dem gezeigten Ausführungsbeispiel sind zudem die flachen Flanken 123 leicht nach außen konvex gekrümmt. Die mit ihren Mittelteilen 222 anliegenden Fortsätze 22 sind gegenüber dem äußeren kreisförmigen Umfang entsprechend dem Verlauf der flachen Flanken 123 eingebogen, so dass sich eine flächige Anlage mit geringer Reibung in Eindrehrichtung und eine sichere Abstützung an den steilen Flanken 124 in Aufdrehrichtung (entgegen der Eindrehrichtung) und damit eine zuverlässig funktionierende Aufdrehsicherung ergibt. In dem festgezogenen Zustand der Schraube 1 kann sich diese daher nicht in Rückwärtsrichtung selbsttätig aufdrehen. Die Ausdehnung des Mittelteils 222 in Umfangsrichtung ist dabei kürzer als die Ausdehnung einer flachen Flanke 123 in Umfangsrichtung. Die konvexe Krümmung der flachen Flanken 123 nach außen ergibt gegenüber einer im Querschnitt geraden Flanke einen verbesserten Gleiteffekt, da der Anstellwinkel der Flanke gegenüber dem Mittelteil mit zunehmender Auslenkung des Mittelteils 222 flacher wird, während sich die Federkraft vergrößert. Die Betätigung der Schraube 1 ist mittels eines in die Werkzeugaufnahme 121 eingesetzten Werkzeugs leicht möglich. Alternativ zu dem gezeigten Ausführungsbeispiel kann die Werkzeugaufnahme auf der Oberfläche des Schraubkopfes 12 auch vorstehend und z. B. als Sechskant ausgebildet sein.

Fig. 3 zeigt die Schraube nach Fig. 2A mit der Kopfkontur 122 nach Fig. 2B und dem Sicherungselement 2 verdeutlicht in perspektivischer Darstellung. Der nach außen konvex vorstehende Übergangsabschnitt 221 trägt vorteilhaft zu der federelastischen Eigenschaft des Fortsatzes 22 bei.

Weitere Ausführungsbeispiele für Schrauben mit Aufdrehsicherung, bei der die Sicherungselemente 2 unterschiedlich ausgebildet sind, zeigen die Fig. 4 und 5.

Bei dem Ausführungsbeispiel nach Fig. 4 erstreckt sich der Fortsatz 22 nach der Abbiegung geradlinig schräg bis zur Oberseite des Kopfes 12 und liegt lediglich an dem Randbereich zwischen Oberseite und Umfangsfläche des Kopfes 12 an der Kopfkontur 122 an, wodurch sich die entgegen der federelastischen Kraft wirkenden Hebelkräfte des Fortsatzes 22 sowie die Gleitfläche gegenüber dem vorangehenden Ausführungsbeispiel ändern.

Bei dem Ausführungsbeispiel nach Fig. 5 ist der Fortsatz 22 radial bezüglich des Ringabschnittes 21 ausgedehnt und an einem radial nach außen gerichteten flachen Steg des Ringabschnittes 21 seitlich nach oben abgebogen und besitzt in seinem oberen Abschnitt einen radial nach innen vortretenden Randbereich, der mit der Kopfkontur 122 in Kontakt gebracht ist, sowie eine den Randbereich der Oberseite des Kopfes 12 übergreifenden nasenartigen Vorsprung. Auch diese Ausbildung des Sicherungselements 2 lässt sich vorteilhaft als Stanz-Biege-Teil fertigen.

Die Sicherungsscheibe 2 lässt sich in Verbindung mit unterschiedlichen Schrauben 1 verwenden und gegebenenfalls an unterschiedliche Kopfformen anpassen und auch auf unterschiedliche Oberflächeneigenschaften des Untergrunds bzw. von Werkstücken abstimmen.

## Patentansprüche

1. Schraube mit Aufdrehsicherung, die ein Sicherungselement (2) aufweist, welches mit einem Ringabschnitt (21) versehen und mit diesem um einen Schaft (11) der Schraube (1) unter einem Kopf (12) derselben eingesetzt oder einsetzbar ist und in einem an einer Basis angeschraubten Zustand der Schraube (1) deren Rückdrehen entgegen einer Einschraubrichtung verhindert, wobei das Sicherungselement (2) an dem Ringabschnitt (21) auf dessen der zugewandten Oberfläche der Basis zugekehrten Seite mit mindestens einem in die Oberfläche beim Eindrehen der Schraube (1) eindrückbaren Vorsprung (231) versehen ist,
wobei das Sicherungselement (2) in dem Außenumfangsbereich des Ringabschnitts (21) mit fingerartigen Fortsätzen (22) versehen ist, die sich im eingesetzten Zustand des Sicherungselements (2) entlang dem Umfang des Kopfes (12) erstrecken und unter federelastischen Kräften des Sicherungselements (2) mit einer entgegen der Eindrehrichtung hemmend wirkenden Oberflächenstruktur des Kopfes (12) in Anlage treten, **dadurch gekennzeichnet, dass** die hemmend wirkende Oberflächenstruktur in Eindrehrichtung abfallende flache Flanken (123) aufweist, die über entgegen der Eindrehrichtung abfallende steilere Flanken (124) ineinander übergehen, und
dass die Fortsätze (22) nach innen abgebogene Endabschnitte (223) aufweisen, die den Kopf (12) oder einen daran radial vortretenden oder mittels einer umlaufenden Nut begrenzten Umfangsabschnitt desselben, in dem die hemmend wirkende Oberflächenstruktur ausgebildet ist, auf dessen von dem Schaft (11) abgekehrten Oberseite übergreifen.

2. Schraube mit Aufdrehsicherung nach Anspruch 1,
**dadurch gekennzeichnet,**
**dass** die Fortsätze (22) selbst federelastisch ausgebildet sind.

3. Schraube mit Aufdrehsicherung nach einem der vorhergehenden Ansprüche,
**dadurch gekennzeichnet,**
**dass** die Fortsätze (22) über einen nach außen ausgebogenen Übergangsabschnitt (221) in den Ringabschnitt (21) übergehen.

4. Schraube mit Aufdrehsicherung nach einem der vorhergehenden Ansprüche,
**dadurch gekennzeichnet,**
**dass** das Sicherungselement (2) als Stanz-Biege-Teil oder Formteil aus Metall oder als Formteil aus Kunststoff hergestellt ist.

5. Schraube mit Aufdrehsicherung nach einem der vorhergehenden Ansprüche,
**dadurch gekennzeichnet,**
**dass** die Fortsätze (22) am Außenumfangsbereich und/oder der mindestens eine Vorsprung (231) an einem Innenumfangsbereich des Ringabschnittes (21) abgebogen ist/sind.

6. Schraube mit Aufdrehsicherung nach einem der vorhergehenden Ansprüche,
**dadurch gekennzeichnet,**
**dass** der lichte Abstand zwischen dem Ringabschnitt (21) und dem abgebogenen Endabschnitt (223) mindestens der Höhe des Kopfes (12) oder des Unfangsabschnitts in axialer Richtung der Schraube (1) entspricht.

7. Schraube mit Aufdrehsicherung nach Anspruch 6,
**dadurch gekennzeichnet,**
**dass** die hemmend wirkende Oberflächenstruktur an der Umfangsfläche des Kopfes (12) und/oder auf dessen von dem Schaft (11) abgewandter Oberseite ausgebildet ist.

8. Schraube mit Aufdrehsicherung nach einem der vorhergehenden Ansprüche,
**dadurch gekennzeichnet,**
**dass** die an der Umfangsfläche des Kopfes (12) ausgebildeten flachen Flanken (123) im Querschnitt geradlinig oder nach außen konvex geformt sind.

9. Schraube mit Aufdrehsicherung nach einem der vorhergehenden Ansprüche, ,
**dadurch gekennzeichnet,**
**dass** die Ausdehnung der Fortsätze (22) in Eindrehrichtung höchstens so groß ist wie die Ausdehnung der flachen Flanken (123).

10. Schraube mit Aufdrehsicherung nach einem der vorhergehenden Ansprüche,
**dadurch gekennzeichnet,**
**dass** die Fortsätze (22) in Umfangsrichtung ausgedehnt und entsprechend der Kontur der flachen Flanken (123) gegenüber der Umfangslinie verschränkt sind oder
**dass** die Fortsätze 22 in radialer Richtung ausgedehnt sind.

11. Schraube mit Aufdrehsicherung nach einem der vorhergehenden Ansprüche,
**dadurch gekennzeichnet,**
**dass** die eindrückbaren Vorsprünge (231) mit eindrückbaren Spitzen versehen sind.

## Claims

1. Screw with anti-loosening means which has a securing element (2) which is provided with an annular portion (21) and is inserted or is insertable with the latter around a shank (11) of the screw (1) under a head (12) of same and, in a state of the screw (1) in which the latter is screwed to a base, prevents said screw from rotating back counter to a screwing-in direction, wherein the securing element (2), on that side of the annular portion (21) which is turned towards the facing surface of the base, is provided with at least one projection (231) which can be pressed into the surface as the screw (1) is being screwed in, wherein the securing element (2) is provided with finger-like extensions (22) in the outer circumferential region of the annular portion (21), said finger-like extensions extending along the circumference of the head (12), in the inserted state of the securing element (2), and, under spring-elastic forces of the securing element (2), entering into contact with a surface structure of the head (12), the surface structure having an inhibiting effect counter to the screwing-in direction, **characterized in that** the surface structure having an inhibiting effect has flat flanks (123) which slope in the screwing-in direction and merge together via steeper flanks (124) sloping counter to the screwing-in direction, and **in that** the extensions (22) have inwardly bent end portions (223) which engage over the head (12) or a circumferential portion thereof which projects radially thereon or is bounded by means of an encircling groove, in which the surface structure having an inhibiting effect is formed, on the upper side of said head or circumferential portion that is turned away from the shank (11).

2. Screw with anti-loosening means according to Claim 1, **characterized in that** the extensions (22) themselves are of spring-elastic design.

3. Screw with anti-loosening means according to either of the preceding claims, **characterized in that** the extensions (22) merge via an outwardly bent transition portion (221) into the annular portion (21).

4. Screw with anti-loosening means according to one of the preceding claims, **characterized in that** the securing element (2) is produced as a punched and bent part or shaped part composed of metal or as a shaped part composed of plastic.

5. Screw with anti-loosening means according to one of the preceding claims, **characterized in that** the extensions (22) are bent on the outer circumferential region and/or the at least one projection (231) is bent on an inner circumferential region of the annular portion (21).

6. Screw with anti-loosening means according to one of the preceding claims, **characterized in that** the clear distance between the annular portion (21) and the bent end portion (223) corresponds at least to the height of the head (12) or of the circumferential portion in the axial direction of the screw (1).

7. Screw with anti-loosening means according to Claim 6, **characterized in that** the surface structure having an inhibiting effect is formed on the circumferential surface of the head (12) and/or on the upper side thereof facing away from the shank (11).

8. Screw with anti-loosening means according to one of the preceding claims, **characterized in that** the flat flanks (123) formed on the circumferential surface of the head (12) have a rectilinear or outwardly convex shape in cross section.

9. Screw with anti-loosening means according to one of the preceding claims, **characterized in that** the extent of the extensions (22) in the screwing-in direction is at maximum the same size as the extent of the flat flanks (123).

10. Screw with anti-loosening means according to one of the preceding claims, **characterized in that** the extensions (22) are extended in the circumferential direction and are staggered in relation to the circumferential line in a manner corresponding to the contour of the flat flanks (123), or **in that** the extensions (22) are extended in the radial direction.

11. Screw with anti-loosening means according to one of the preceding claims, **characterized in that** the projections (231) which can be pressed in are provided with points which can be pressed in.

## Revendications

1. Vis à sûreté antidévissage, comportant un élément d'arrêt (2) qui est muni d'une région annulaire (21) par laquelle il est, ou peut être engagé autour d'une tige (11) de ladite vis (1), au-dessous d'une tête (12) de cette dernière, et qui interdit, lorsque ladite vis (1) est à l'état vissé contre une base, la rotation antagoniste de ladite vis en sens inverse d'une direction de vissage, lequel élément d'arrêt (2) est pourvu sur ladite région annulaire (21), du côté de celle-ci tourné vers la surface de ladite base située en vis-à-vis, d'au moins une protubérance (231) pouvant être enfoncée dans ladite surface lors du vissage de ladite vis (1), ledit élément d'arrêt (2) étant doté, dans la zone périphérique extérieure de ladite région annulaire (21), d'appendices (22) du type doigts qui s'étendent le long du pourtour de la tête (12) à l'état inséré dudit élément d'arrêt (2) et viennent en applique, sous l'action de forces élastiques dudit élément d'arrêt (2), contre une structure de la surface de ladite tête (12) exerçant un effet inhibiteur en sens inverse de la direction du vissage,
**caractérisée par le fait**
**que** la structure de surface, exerçant un effet inhibiteur, comporte des flancs aplatis (123) qui déclinent dans la direction du vissage et fusionnent les uns dans les autres par l'intermédiaire de flancs (124) à pente plus accentuée, déclinant en sens inverse de ladite direction du vissage ; et
**que** les appendices (22) présentent des régions extrêmes (223) recourbées vers l'intérieur et venant coiffer, à la face supérieure de la tête qui est tournée à l'opposé de la tige (11), ladite tête (12) ou une zone du pourtour de ladite tête qui fait saillie radialement sur cette dernière ou est délimitée au moyen d'une rainure circonférentielle, et dans laquelle la structure de surface à effet inhibiteur est ménagée.

2. Vis à sûreté antidévissage, selon la revendication 1,
**caractérisée par le fait**
**que** les appendices (22) offrent une réalisation douée par elle-même d'élasticité.

3. Vis à sûreté antidévissage, selon l'une des revendications précédentes,
**caractérisée par le fait**
**que** les appendices (22) fusionnent dans la région annulaire (21) par l'intermédiaire d'une zone de transition (221) cintrée vers l'extérieur.

4. Vis à sûreté antidévissage, selon l'une des revendications précédentes,
**caractérisée par le fait**
**que** l'élément d'arrêt (2) est fabriqué en tant que pièce produite par poinçonnage et pliage, pièce moulée en métal, ou pièce moulée en matière plastique.

5. Vis à sûreté antidévissage, selon l'une des revendications précédentes,
**caractérisée par le fait**
**que** les appendices (22) sont recourbés dans la zone périphérique extérieure, et/ou la protubérance (231) à présence minimale est recourbée dans une zone périphérique intérieure de la région annulaire (21).

6. Vis à sûreté antidévissage, selon l'une des revendications précédentes,
**caractérisée par le fait**
**que** la distance intérieure, entre la région annulaire (21) et la région extrême recourbée (223), correspond au moins à la hauteur de la tête (12) ou de la zone du pourtour dans la direction axiale de ladite vis (1).

7. Vis à sûreté antidévissage, selon la revendication 6,
**caractérisée par le fait**
**que** la structure de surface, exerçant un effet inhibiteur, est ménagée sur la surface du pourtour de la tête (12) et/ou à la face supérieure de cette dernière qui est tournée à l'opposé de la tige (11).

8. Vis à sûreté antidévissage, selon l'une des revendications précédentes,
**caractérisée par le fait**
**que** les flancs aplatis (123) façonnés sur la surface du pourtour de la tête (12) présentent, en coupe transversale, une forme rectiligne ou à convexité vers l'extérieur.

9. Vis à sûreté antidévissage, selon l'une des revendications précédentes,
**caractérisée par le fait**
**que** l'étendue des appendices (22) est au maximum égale, dans la direction du vissage, à l'étendue des flancs aplatis (123).

10. Vis à sûreté antidévissage, selon l'une des revendications précédentes,
**caractérisée par le fait**
**que** les appendices (22) s'étendent dans la direction périphérique et sont déjetés par rapport à la ligne de pourtour, en concordance avec le profil des flancs aplatis (123) ; ou
**que** lesdits appendices (22) s'étendent dans la direction radiale.

11. Vis à sûreté antidévissage, selon l'une des revendications précédentes,
**caractérisée par le fait**
**que** les protubérances enfonçables (231) sont pourvues de pointes enfonçables.
